# EUROPÄISCHE PATENTSCHRIFT

(11) **EP 2 632 104 B1**
(45) Veröffentlichungstag und Bekanntmachung des Hinweises auf die Patenterteilung: **10.09.2014**
(21) Anmeldenummer: 12001169.7
(22) Anmeldetag: 22.02.2012
(51) Int. Cl.: H04L 29/06, H04W 12/06, H04N 21/61, H04N 21/643, H04N 21/258, H04N 21/254

(54) **Verfahren und Telekommunikationssystem zur Anmeldung eines Nutzers an einem gesicherten personalisierten IPTV-Dienst**
Method and telecommunications system for user login to a secure IPTV service
Procédé et système de télécommunication pour l'inscription d'un utilisateur à un service IPTV personnalisé sécurisé

(43) Veröffentlichungstag der Anmeldung: 28.08.2013
(73) Patentinhaber: Deutsche Telekom AG, 53113 Bonn (DE)
(72) Erfinder: Mildener, Frank, 64331 Weiterstadt (DE); Meßmer, Martin, 13127 Berlin (DE); Friese, Ingo, 1227 Berlin (DE)
(74) Vertreter: Kampfenkel, Klaus

(56) Entgegenhaltungen:
- WO-A1-2009/071132
- WO-A2-2010/086764
- YOUN-KYOUNG PARK ET AL: "User Authentication Mechanism Using Java Card for Personalized IPTV Services", CONVERGENCE AND HYBRID INFORMATION TECHNOLOGY, 2008. ICHIT '08. INTERNATIONAL CONFERENCE ON, IEEE, PISCATAWAY, NJ, USA, 28. August 2008 (2008-08-28), Seiten 618-626, XP031319775, ISBN: 978-0-7695-3328-5

## Beschreibung

Die Erfindung betrifft ein Verfahren zum Schutz der Privatsphäre bei der Anmeldung eines Mobilfunknetzteilnehmers an IPTV-Diensten sowie ein Telekommunikationssystem zur Durchführung eines solchen Verfahrens.

IPTV (Internet Protocol Television) bezeichnet die Nutzung eines IP-basierten Netzes zur Übertragung von Fernsehen, gegebenenfalls ergänzt um weitere Multimediadienste wie Video, Audio, Texte, Bilder oder Daten. IPTV-Dienste werden von einem Telekommunikations-Anbieter einem beschränkten Nutzerkreis in seinem Breitbandnetz zur Verfügung gestellt. Darin unterscheidet sich IPTV vom sogenannten Internet-Fernsehen ("TV over Internet"), bei welchem beliebige im Internet verfügbare Programme oder Inhalte von jedem Internetnutzer jederzeit und überall heruntergeladen werden können. Dementsprechend ist das IP-basierte Netz, welches bei IPTV statt klassischer Übertragungswege wie Rundfunk, Kabel oder Satellit eingesetzt wird, beispielsweise das Breitbandnetz eines Telekommunikations-Anbieters.

Unter einem personalisierten IPTV-Produkt ist zu verstehen, dass dieses eine auf einen Nutzer zugeschnittene persönliche Zusammenstellung von IPTV-Inhalten, Tarifen und/oder weiteren Optionen umfasst. Der Zweck der Personalisierung kann beispielsweise der Jugendschutz oder die Bereitstellung individueller Programmpakete bei Mehrpersonenanschlüssen sein.

Heutige Verfahren zur Identifizierung, Authentisierung und Autorisierung des Nutzers eines personalisierten IPTV-Produktes basieren darauf, dass der Nutzer seine Identität bekannt gibt, indem er beispielsweise an dem jeweiligen IPTV-Endgerät über ein vom IPTV-Dienst bereitgestelltes Menü eine entsprechende Kennung eingibt, und in einem zweiten Schritt ein Passwort am IPTV-Endgerät eingibt. Alternativ können entsprechende Daten wie zum Beispiel Nutzername und Passwort auch im IPTV-Endgerät gespeichert sein.

Somit muss sich gegenüber dem IP-TV-Dienst entweder der Nutzer direkt identifizieren, oder das IPTV-Endgerät des Nutzers identifiziert sich mittels gespeicherter Nutzerdaten. An einem fremden IPTV-Endgerät, welches nicht über gespeicherte Nutzerdaten verfügt, bleibt nur die Alternative der Eingabe der Daten durch den Nutzer, wodurch ein Schutz der Privatsphäre des Nutzers nicht gewährleistet ist. Zudem kann es zu Eingabefehlern führen, da der Nutzer nutzerspezifische Daten zur Durchführung der Authentifizierung am IPTV-Endgerät eingeben muss.

Aus WO 2010/086764 A2 sind ein Benutzergerät, ein Home Subscriber Server (HSS) und Methoden bekannt, um einem Benutzer, welcher bei einem ersten Dienst, wie zum Beispiel einem IMS (IP Multimedia Subsystem)-Dienst, angemeldet ist, den Zugriff auf einen zweiten Dienst wie beispielsweise einen IPTV-Dienst zu ermöglichen. Zu diesem Zweck fordert der Benutzer über den ersten Dienst einen Sicherheits-Token für die Bereitstellung des zweiten Dienstes an, woraufhin das Netzwerk die Benutzerdaten validiert und den Sicherheits-Token, beispielsweise in Form eines PIN-Codes, bereitstellt, den der Benutzer dann an einem anderen Terminal eingeben kann, um zum Beispiel Zugriff auf einen personalisierten IPTV-Dienst zu erhalten.

Es sind ferner hardwarebasierte Verfahren unter Einsatz von CI-Karten bzw. CI-Modulen (CI: Common Interface) sowie deren Weiterentwicklung CI+ bekannt. Diese sind jedoch für eine mobile Nutzung nicht geeignet, da in Receivern und TV-Geräten unterschiedliche oder keine CI-Module Anwendung finden können und zudem Software-Updates notwendig sein können, die bei einer mobilen Nutzung, zum Beispiel an IPTV-Endgeräten, die nicht dem Nutzer gehören, wie zum Beispiel in Hotels, nicht umsetzbar sind.

Der Erfindung liegt die Aufgabe zu Grunde, ein Verfahren sowie ein Telekommunikationssystem zum Schutz der Privatsphäre bei der Anmeldung eines Nutzers an einem gesicherten personalisierten IPTV-Dienst zur Verfügung zu stellen, welches die Privatsphäre des Nutzers schützt, Bedienfehler weitgehend ausschließt und leicht handhabbar ist.

Ein Kerngedanke der Erfindung ist darin zu sehen, dass sich nicht der Nutzer am gewünschten IPTV-Dienst, auch IPTV-Service genannt, sondern der gewünschte IPTV-Dienst und der an der Authentifizierung beteiligte Authentifizierungsdienst gegenüber dem Nutzer identifizieren müssen. Ein weiterer Gesichtspunkt der Erfindung kann darin gesehen werden, dass der Nutzer keine nutzerbasierten Daten an einem IPTV-Endgerät oder Mobilfunkgerät zur Authentifizierung eingeben muss. Auf diese Art und Weise können Bedienfehler ausgeschlossen werden. All dies wird dadurch erreicht, dass die zur Anmeldung des Nutzers am gesicherten personalisierten IPTV-Dienst erforderliche Authentifizierung zwischen dem Mobilfunkgerät des Nutzers und einem Authentifizierungsdienst durchgeführt wird. Hierzu muss der Authentifizierungsprozess nach erfolgter Identifizierung des IPTV-Dienstes nur noch vom Nutzer durch einen entsprechenden Startbefehl eingeleitet werden.

Gemäß einem weiteren Aspekt werden zur Durchführung des Authentifizierungsprozesses die bekannten technischen Spezifikationen 3GPP TS 24.109, 3GPP TS 29.109 und 3GPP TS 33.223 berücksichtigt.

Das oben genannte technische Problem wird zum einen durch die Verfahrensschritte des Anspruchs 1 gelöst.

Danach wird ein Verfahren zum Schutz der Privatsphäre bei der Anmeldung eines Nutzers an einem gesicherten personalisierten IPTV-Dienst mittels eines an einem Mobilfunknetzbetreiber angemeldeten Mobilfunkgeräts, in welchem eine Authentifizierungs-Applikation installiert ist, definiert.

Zunächst fordert ein Nutzer einen gesicherten personalisierten IPTV-Dienst über ein IPTV-Endgerät an, vorzugsweise mittels einer in dem IPTV-Endgerät installierten IPTV-Applikation. Da die IPTV-Applikation vorzugsweise als Client-Applikation ausgebildet ist, wird diese im Folgenden auch kurz als IPTV-Client bezeichnet. Bei dem IPTV-Endgerät kann es sich um eine Set-Top-Box handeln, die typischerweise vom IPTV-Anbieter zur Verfügung gestellt wird, und die eine erste Schnittstelle zum Anschließen an ein Breitbandnetz und eine zweite Schnittstelle zum Anschließen eines Fernsehgerätes umfasst. Das IPTV-Endgerät kann alternativ auch als Fernsehgerät ausgebildet sein, in welches die Funktionalität der Set-Top-Box, insbesondere der IPTV-Client, integriert ist. Denkbar ist auch der Einsatz eines gewöhnlichen Personal-Computers als IPTV-Endgerät, auf dem eine spezielle, vom IPTV-Dienst unterstützte Software-Applikation installiert ist. An dieser Stelle sei angemerkt, dass unter einem gesicherten IPTV-Dienst ein anmelde- oder authentifizierungspflichtiger IPTV-Dienst und unter einem personalisierten IPTV-Dienst ein beispielsweise hinsichtlich der IPTV-Inhalte, Tarife und/oder weiterer Optionen individuell auf einen Nutzer angepasster IPTV-Dienst gemeint ist.

Einen gesicherten IPTV-Dienst kann ein Nutzer in herkömmlicher Weise anfordern, indem er beispielsweise im Menü eines IPTV-Endgerätes den gewünschten IPTV-Dienst auswählt. Hierdurch wird eine Kommunikationsverbindung zwischen dem IPTV-Endgerät und einem Authentifizierungsdienst hergestellt.

Eine solche Kommunikationsverbindung kann automatisch hergestellt werden. Denkbar ist aber auch, dass für den angeforderten IPTV-Dienst in einem vom IPTV-Endgerät bereitgestellten Bedien-Menü zum Beispiel ein Menüpunkt "User Login" vorgesehen ist, über den die Option "Personalisiertes IPTV" angeboten wird. Wählt der Nutzer diese Option, wird ein entsprechender Authentifizierungswunsch oder eine entsprechende Anmeldeanforderung zum Authentifizierungsdienst umgeleitet.

Der Authentifizierungsdienst kann in einem Authentifizierungssystem oder Authentifizierungsrechner des Mobilfunknetzbetreibers, an welchem das Mobilfunkgerät angemeldet ist, oder eines anderen Mobilfunknetzbetreibers installiert sein. Nunmehr werden die Adresse des Authentifizierungsdienstes und eine Sitzungsidentifikation, auch Session ID genannt, die die Kommunikationsverbindung des Nutzers zum gesicherten personalisierten IPTV-Dienst eindeutig identifiziert, vom Authentifizierungsdienst zum IPTV-Endgerät übertragen. Auf diese Weise identifizieren sich der Authentifizierungsdienst und der angeforderte IPTV-Dienst gegenüber dem Nutzer und nicht umgekehrt.

Angemerkt sei an dieser Stelle, dass es beliebige Möglichkeiten gibt, die Sitzungsidentifikation des angeforderten IPTV-Dienstes dem Authentifizierungsdienst mitzuteilen.

Vorteilhafter Weise können die Adresse des Authentifizierungsdienstes und die Sitzungsidentifikation des gesicherten personalisierten IPTV-Dienstes in Form einer kodierten Information, insbesondere eines Barcodes, zum IPTV.-Endgerät übertragen werden.

Die im IPTV-Endgerät empfangene Adresse der Authentifizierungseinrichtung und die empfangene Sitzungsidentifikation des gesicherten personalisierten IPTV-Dienstes werden nun zum Mobilfunkgerät übertragen.

Im Fall der Barcode-Übertragung kann der Barcode mittels eines Codelesers oder einer Kamera des Mobilfunkgerätes vom Fernseher in das Mobilfunkgerät übernommen werden. Denkbar ist allerdings auch, dass beispielsweise die kodierten Informationen automatisch nach Erhalt oder durch Steuerung des Nutzers vom IPTV-Endgerät zum Beispiel über eine Bluetooth-Schnittstelle zum Mobilfunkgerät übertragen werden.

Die Authentifizierungsapplikation des Mobilfunkgeräts wertet die Adresse des Authentifizierungsdienstes aus und überträgt eine Authentifizierungsmeldung, welche zumindest eine Authentifizierungsanfrage und eine Identifikationsnummer des über das Mobilfunkgerät angemeldeten Nutzers enthält, zum Authentifizierungsdienst.

Vorzugsweise kann auch noch die Sitzungsidentifikation des angeforderten IPTV-Dienstes ausgewertet werden. Die Authentifizierungsmeldung kann nach Autorisierung durch den Nutzer, zum Beispiel durch einfache Bestätigung oder auch durch Eingabe einer PIN am Mobilfunkgerät übertragen werden. Durch die Authentifizierungsanfrage wird der Authentifizierungsdienst aufgefordert, die Authentifizierungsprozedur zu starten. Die Authentifizierungsmeldung wird über das Mobilfunknetz des Mobilfunknetzbetreibers, an welchem das Mobilfunkgerät angemeldet ist, übertragen.

Unter Ansprechen auf die Authentifizierungsanfrage veranlasst der Authentifizierungsdienst die Durchführung einer sicheren Authentifizierung zwischen dem Mobilfunkgerät und dem Authentifizierungsdienst. Wenn die Authentifizierung erfolgreich war, erzeugt der Authentifizierungsdienst ein Kennwort und überträgt dieses Kennwort an das IPTV-Endgerät. Es ist wichtig darauf hinzuweisen, dass das Kennwort keine nutzerspezifischen Daten enthält. Bei dem Kennwort kann es sich um ein Einmalkennwort, einen sogenannten One-Time-Token handeln.

Um das personalisierte IPTV bereitstellen zu können, ermittelt der Authentifizierungsdienst eine IPTV-Nutzerkennung auf Basis der Identifikationsnummer des über das Mobilfunkgerät angemeldeten Nutzers, beispielsweise mittels einer hinterlegten Zuordnungstabelle, und überträgt diese an den IPTV-Dienst, der auf Basis der IPTV-Nutzerkennung ein personalisiertes IPTV bereitstellen kann. Weitere, mit der IPTV-Nutzerkennung verknüpfte Nutzerparameter oder Nutzerattribute, wie zum Beispiel das Alter des Nutzers oder vom Nutzer gebuchte IPTV-Produkte, können im Authentifizierungsdienst hinterlegt sein und mit zum IPTV-Dienst übertragen werden.

Um sich am gesicherten personalisierten IPTV-Dienst anzumelden, wird nun das Kennwort vom IPTV-Endgerät zum gesicherten personalisierten IPTV-Dienst übertragen.

Aufgrund einer Vertrauensbeziehung zwischen dem IPTV-Dienst und dem Authentifizierungsdienst kann der IPTV-Dienst nun das Kennwort beim Authentifizierungsdienst validieren.

Alternativ kann das Kennwort vom Authentifizierungsdienst auch an den sicheren IPTV-Dienst übertragen werden, wobei der IPTV-Dienst dann das vom Authentifizierungsdienst und das vom IPTV-Endgerät empfangene Kennwort auf Übereinstimmung hin prüft.

Bei der sicheren Authentifizierung des Mobilfunkgerätes beim Authentifizierungsdienst kann es sich zweckmäßiger Weise um ein Challenge-Response-Verfahren handeln.

Vorteilhafter Weise fordert der Authentifizierungsdienst die zur Durchführung des Challenge-Response-Verfahrens erforderlichen Authentifizierungsinformationen von dem Mobilfunknetzbetreiber, bei welchem das Mobilfunkgerät des Nutzers angemeldet ist, an.

Gemäß einer nicht beanspruchten Ausführungsform wird die Authentifizierung zwischen Authentifizierungsdienst, dem Mobilfunkbetreiber und dem Mobilfunkgerät entsprechend der 3GPP TS 33.223 Spezifikation durchgeführt.

Gemäß einer zweckmäßigen Weiterbildung enthält die von der Authentifizierungs-Applikation des Mobilfunkgeräts erzeugte Authentifizierungsmeldung ferner die Adresse des Authentifizierungsdienstes und die Sitzungsidentifikation des ausgewählten IPTV-Dienstes.

Das oben genannte technische Problem wird ebenfalls durch die Merkmale des Anspruchs 9 gelöst.

Danach wird ein Telekommunikationssystem zum Schutz der Privatsphäre bei der Anmeldung eines Nutzers an einem gesicherten personalisierten IPTV-Dienst mittels eines Mobilfunkgerätes bereitgestellt.

Das Telekommunikationssystem weist eine Plattform auf, die wenigstens einen sicheren personalisierten IPTV-Dienst zur Verfügung stellt. Weiterhin ist ein IPTV-Endgerät vorgesehen. Mittels des IPTV-Endgerätes kann der Nutzer einen gesicherten personalisierten IPTV-Dienst anfordern. Das Telekommunikationssystem enthält ferner wenigstens ein bei einem Mobilfunknetzbetreiber angemeldetes Mobilfunkgerät, auf welchem eine Authentifizierungs-Applikation installiert ist. Weiterhin ist ein Authentifizierungsdienst vorgesehen, der über eine erste Kommunikationsschnittstelle mit dem IPTV-Endgerät und über eine zweite Kommunikationsschnittstelle mit der Authentifizierungs-Applikation des Mobilfunkgerätes kommuniziert. Der Authentifizierungsdienst ist zweckmäßiger Weise in einem separaten Authentifizierungssystem des Mobilfunkbetreibers, bei welchem das Mobilfunkgerät angemeldet ist, oder eines anderen Mobilfunknetzbetreibers installiert. Der Authentifizierungsdienst ist dazu ausgebildet, die Adresse des Authentifizierungsdienstes und die Sitzungsidentifikation eines am IPTV-Endgerät ausgewählten sicheren personalisierten IPTV-Dienstes zum IPTV-Endgerät zu übertragen. Das Telekommunikationssystem umfasst ferner eine Einrichtung zum Übertragen der Adresse des Authentifizierungsdienstes und der Sitzungsidentifikation des angeforderten IPTV-Dienstes zur Authentifizierungs-Applikation des Mobilfunkgerätes. Die Authentifizierungs-Applikation des Mobilfunkgerätes erzeugt unter Ansprechen auf die empfangene Adresse des Authentifizierungsdienstes eine Authentifizierungsmeldung, welche eine Authentifizierungsaufforderung und eine Identifikationsnummer des Mobilfunkgeräts enthält. Sie überträgt diese Authentifizierungsmeldung über ein Mobilfunknetz zum Authentifizierungsdienst. Um den Schutz der Privatsphäre bei der Anmeldung des Nutzers am sicheren IPTV-Dienst sicher zu stellen, sind der Authentifizierungsdienst und die Authentifizierungs-Applikation des Mobilfunkgeräts zur Durchführung einer sicheren Authentifizierung ausgebildet. Nach einer erfolgreichen Authentifizierung erzeugt der Authentifizierungsdienst ein Kennwort und überträgt dieses Kennwort über die erste Kommunikationsschnittstelle zum IPTV-Endgerät. Ferner ermittelt der Authentifizierungsdienst eine der Identifikationsnummer des Mobilfunkgeräts zugeordnete IPTV-Nutzerkennung und überträgt diese zum Zwecke der Personaisierung zum IPTV-Dienst. Das IPTV-Endgerät ist dazu ausgebildet, das Kennwort automatisch oder mit der Zustimmung des Nutzers zum IPTV-Dienst zu übertragen. Unter Ansprechen auf das empfangene Kennwort gibt der IPTV-Dienst den Zugang für den Nutzer frei. Der Nutzer kann sich auf diese Weise zum Beispiel anonym an dem sicheren personalisierten IPTV-Dienst anmelden.

Vorteilhafter Weise sind der Authentifizierungsdienst und die Authentifizierungs-Applikation des Mobilfunkgeräts zur Durchführung eines Challenge-Response-Verfahrens ausgebildet.

Gemäß einer vorteilhaften Weiterbildung kommuniziert der Authentifizierungsdienst über eine dritte Kommunikationsschnittstelle mit einer Authentifizierungseinrichtung des Mobilfunkbetreibers, bei welchem das Mobilfunkgerät angemeldet ist, um die für das Challenge-Response-Verfahren erforderliche Information zu erhalten.

Gemäß einer nicht beanspruchten Ausführungsform sind der Authentifizierungsdienst, die Authentifizierungs-Applikation des Mobilfunkgeräts und die Authentifizierungseinrichtung des Mobilfunknetzbetreibers zur Durchführung einer Authentifizierung entsprechend der 3GPP TS 33.223 Spezifikation ausgebildet sind. In diesem Fall ist in der Authentifizierungseinrichtung eine Bootstrapping Server Function (BSF) installiert.

Vorteilhafter Weise erfolgt die Validierung des Kennwortes, welches der IPTV-Dienst vom IPTV-Endgerät empfängt, durch den IPTV-Dienst über eine vertauensvolle Kommunikationsschnittstelle des Authentifizierungsdienst.

Das Kennwort kann ein sogenannter One-Time-Token sein.

Bei der Identifikationsnummer des Nutzers des Mobilfunkgeräts kann es sich um eine IMSI- oder MSISDN-Nummer handeln. Das Akronym IMSI steht für International Mobil Subscriber Identity, während das Akronym MSISDN für Mobil Subscriber ISDN steht. Die Bedeutung und Funktion dieser Identifikationsnummern sind allgemein bekannt.

Der Authentifizierungsdienst und die Plattform können zu dem Mobilfunkbetreiber, an dem das Mobilfunkgerät angemeldet ist, oder zu einem anderen Mobilfunkbetreiber gehören.

Die Erfindung wird nachfolgend anhand eines Ausführungsbeispiels in Verbindung mit den beiliegenden Zeichnungen näher erläutert. Es zeigen:
- Fig. 1: den prinzipiellen Aufbau eines Telekommunikationssystems, in welchem die Erfindung verwirklicht ist, und
- Fig. 2: den Kommunikationsablauf zum Schutz der Privatsphäre bei der Anmeldung eines Nutzers an einem gesicherten personalisierten IPTV-Dienst mittels eines Mobilfunkgeräts.

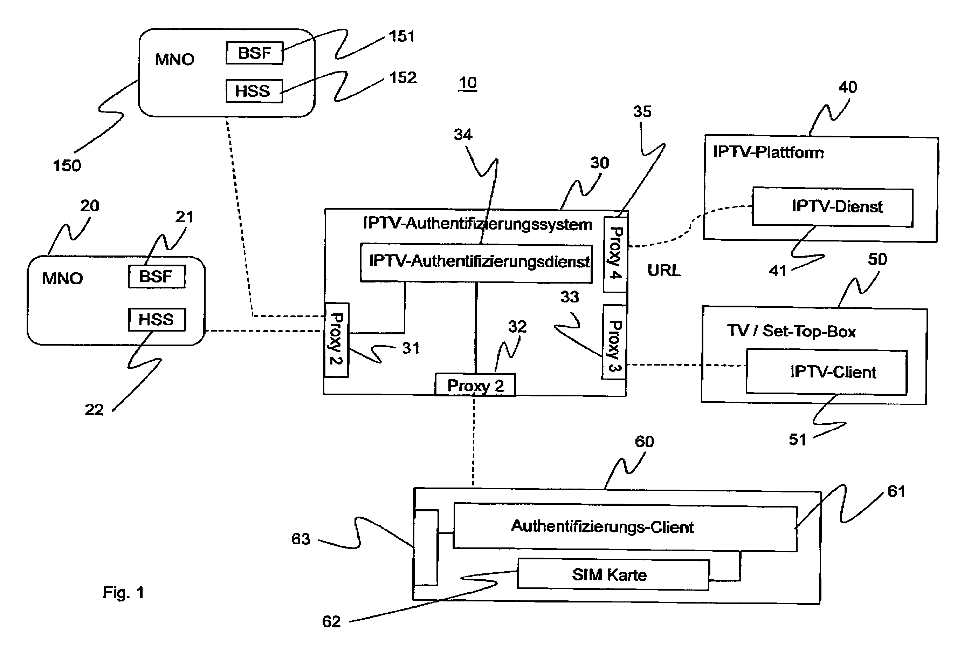

Figur 1 zeigt ein beispielhaftes Telekommunikationssystem 10, in welchem die Erfindung verwirklicht ist. Das Telekommunikationssystem 10 umfasst beispielsweise ein IPTV-Authentifizierungssystem 30, in dem ein IPTV-Authentifizierungsdienst 34 installiert ist. Der IPTV-Authentifizierungsdienst 34 ist dazu ausgebildet, eine IPTV-Authentifizierungsfunktion auszuführen, um einem Nutzer einen Schutz der Privatsphäre bei der Anmeldung an einem IPTV-Dienst zu ermöglichen. Das IPTV-Authentifizierungssystem 30 weist eine erste Kommunikationsschnittstelle 33, auch Proxy genannt, auf, über die der IPTV-Authentifizierungsdienst 34 mit einem IPTV-Endgerät 50 kommunizieren kann. Im dargestellten Ausführungsbeispiel ist das IPTV-Endgerät als Set-Top-Box mit angeschlossenem Fernsehgerät ausgebildet, wobei auf dem IPTV-Endgerät eine IPTV-Client-Applikation 51, kurz IPTV-Client 51, installiert ist, die über die Kommunikationsschnittstelle 33 mit dem Authentifizierungsdienst 34 kommunizieren kann. Weiterhin ist eine IPTV-Plattform 40 vorgesehen, auf der wenigstens ein gesicherter personalisierter IPTV-Dienst 41 realisiert ist. Jedem IPTV-Dienst ist eine Adresse, ein sogenannter Uniform-Ressource-Locator (URL) zugeordnet, mit dessen Hilfe der Nutzer über die IPTV-Client-Applikation 51 den dazugehörenden IPTV-Dienst anfordern kann. Der IPTV-Authentifizierungsdienst 34 des IPTV-Authentifizierungssystems 30 kann über die Kommunikationsschnittstelle 33 oder über eine weitere Kommunikationsschnittstelle 35 mit dem IPTV-Dienst 41 kommunizieren. Die Kommunikationsschnittstelle 33 kann als http- oder https-Schnittstelle ausgebildet sein. Die Kommunikation zwischen dem IPTV-Authentifizierungssystem 30, dem IPTV-Dienst 41 und dem IPTV-Endgerät 50 erfolgt über entsprechende Internetverbindungen.

Das Telekommunikationssystem 10 enthält ferner wenigstens ein Mobilfunkgerät 60, welches dem Nutzer des IPTV-Dienstes 41 gehört. Das Mobilfunkgerät 60, welches ein Mobilfunktelefon sein kann, weist in an sich bekannter Weise eine SIM-Karte 62 auf, welcher eine eindeutige Identifikation beispielsweise in Form einer IMSI-Nummer oder einer MSISDN-Nummer zugeordnet ist. In dem Mobilfunkgerät 60 ist weiterhin ein IPTV-Authentifizierungs-Client 61, auch Authentifizierungs-Applikation genannt, installiert. Für die vorliegende Erfindung ist es unerheblich, ob die IPTV-Authentifizierungs-Applikation 61 im Mobilfunkgerät 60 oder in der SIM-Karte 62 installiert ist. Weiterhin enthält das Mobilfunkgerät 60 einen Barcode-Leser und/oder eine Kamera 63. Das IPTV-Authentifizierungssytem 30 verfügt über eine weitere Kommunikationsschnittstelle 32, über die der Authentifizierungsdienst 34 mit der IPTV-Authentifizierungs-Applikation 61 des Mobilfunkgeräts 60 kommunizieren kann. Die Kommunikationsschnittstelle 32 kann als Kombination aus Ua- und Upa-Schnittstelle implementiert sein, welche in der technischen Spezifikation 3 GPP TS33.223 spezifiziert ist. Wie nachfolgend noch näher erläutert wird, kann die IPTV-Authentifizierungs-Applikation 61 Push-Anforderungsmeldungen erzeugen, mit denen der IPTV-Authentifizierungsdienst 34 aufgefordert werden kann, einen Authentifizierungsprozess zu starten.

Die Kommunikation zwischen dem IPTV-Authentifizierungsdienst 34 und der IPTV-Authentifizierungs-Applikation 61 des Mobilfunkgeräts 60 erfolgt über ein Mobilfunknetz an welchem der Nutzer über das Mobilfunkgerät 60 angemeldet ist. Angenommen sei, dass der Nutzer beim Mobilfunknetzbetreiber 20 angemeldet ist. Um eine Authentifizierung durchführen zu können, kann das Authentifizierungssystem 30 eine weitere Kommunikationsschnittstelle 31 aufweisen, über die der IPTV-Authentifizierungsdienst 34 mit einer Authentifizierungseinrichtung 21 des Mobilfunknetzbetreibers 20 kommunizieren kann. Hierzu ist die Kommunikationsschnittstelle 31 vorzugsweise als Zpn-Schnittstelle implementiert, welche gemäß der technischen Spezifikation 3GPP TS29.109 standardisiert ist. In diesem Fall ist in der Authentifizierungseinrichtung 21 die Bootstrapping Server Function installiert und der IPTV-Authentifizierungsdients 34 kann entsprechend den 3GPP GBA Push-Verfahren eine Challenge-Response-Information, auch GBA Push Information (GPI) genannt, von der Authentifizierungseinrichtung 21 anfordern.

Das Telekommunikationssystem 10 kann weitere Mobilfunknetze anderer Mobilfunkbetreiber umfassen. Der einfachen Darstellung wegen ist lediglich ein weiterer Mobilfunknetzbetreiber 150 dargestellt, der ebenfalls über eine Authentifizierungseinrichtung 151 mit einer Bootstrapping Server Function Funktionalität verfügt. Die Mobilfunkbetreiber 20 und 150 betreiben in an sich bekannter Weise ein Heimat-Teilnehmersystem 22 bzw. 152, auch Home-Subscriber-System genannt. Jedes Home-Subscriber-System verwaltet in an sich bekannter Weise alle Daten der jeweiligen angemeldeten Mobilfunkgeräte. Das Home-Subscriber-System 22 verwaltet unter anderem die Daten des Nutzers des Mobilfunkgerätes 60.

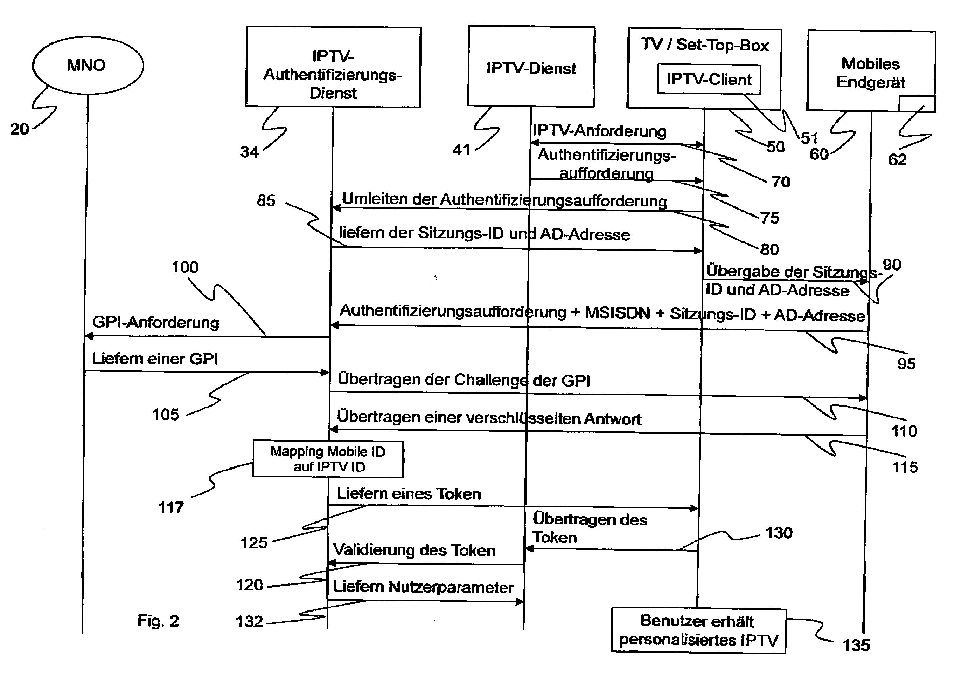

Die Funktionsweise des in Figur 1 gezeigten beispielhaften Telekommunikationssystems wird nun anhand eines Ausführungsbeispiels in Verbindung mit Fig. 2 näher erläutert.

Angenommen sei zunächst, dass das IPTV-Authentifizierungssystem 30 und die Plattform 40 vom Mobilfunknetzbetreiber 150 betrieben werden. Der Nutzer bzw. das Mobilfunkgerät 60 sind Teilnehmer des Mobilfunknetzbetreibers 20.

Nunmehr möchte der Nutzer einen Zugang zu dem gesicherten personalisierten IPTV-Dienst 41 erhalten, ohne sich jedoch gegenüber dem IPTV-Dienst 41 identifizieren zu müssen.

Hierzu kann, wie in Fig. 2 gezeigt, der Nutzer über den IPTV-Cient 51 eine IPTV-Anforderung 70 eingeben, die unter Anderem die Adresse des IPTV-Dienstes 41 enthält. Als Ergebnis kann eine Authentifizierungsaufforderung 75 des IPTV-Dienstes durch das IPTV-Endgerät 50 auf dem Fernsehbildschirm angezeigt werden, die eine Option "Personalisiertes IPTV" enthält. Wählt der Nutzer diese Option über das Bedienmenü des IPTV-Endgerätes 50 aus, wird der IPTV-Cient 51 über die Kommunikationsschnittstelle 33 mit dem Authentifizierungsdienst 34 verbunden. Der IPTV-Client 51 überträgt nunmehr eine Authentifizierungsaufforderungs-Nachricht zum IPTV-Authentifizierungsdienst 34. Mit anderen Worten wird der IPTV-Client 51 unter Ansprechen auf die ausgewählte Authentifizierungsform zum IPTV-Authentifizierungsdienst 34 umgeleitet. Der IPTV-Authentifizierungsdienst 34 verfügt über eine entsprechende Authentifizierungsfunktion, die unter Ansprechen auf die Authentifizierungsaufforderungs-Nachricht 80 eine Antwort-Nachricht 85 erzeugt, welche die Adresse des IPTV-Authentifizierungsdienstes 34 und die Sitzungsidentifikation des IPTV-Dienstes 41 enthält. Die Nachricht 85 wird vorzugsweise in Form eines Barcodes vom IPTV-Authentifizierungsdienst 34 zum IPTV-Client 51 übertragen.

Der IPTV-Authentifizierungsdienst 34 kann die Sitzungsidentifikation des angeforderten IPTV-Dienstes 41 auf verschiedene Weisen erhalten. Denkbar ist, dass der IPTV-Client 51 mit der Nachricht 80 auch die URL des angeforderten IPTV-Dienstes 41 zum IPTV-Authentifizierungsdienst 34 überträgt. Der IPTV-Authentifizierungsdienst 34 fordert dann selbst die Sitzungsidentifikation vom IPTV-Dienst 41 an.

Um den Schutz der Privatsphäre bei der Anmeldung realisieren zu können, kann der Nutzer des Mobilfunknetzbetreibers 20 den empfangenen Barcode mittels des Barcodelesers 63 oder der Kamera 63 in das Mobilfunkgerät 60 übernehmen. Die Übergabe des Barcodes ist in Fig. 2 in Schritt 90 dargestellt. Die IPTV-Authentifizierungs-Applikation 61 des Mobilfunkgeräts 60 ist in der Lage, die Sitzungsidentifikation und die Adresse des IPTV-Authentifizierungsdienstes 34 aus dem Barcode zu gewinnen. Unter Ansprechen auf die im Barcode erhaltene Adresse des IPTV-Authentifizierungsdienstes 34 erzeugt die IPTV-Authentifizierungs-Applikation 61 eine Authentifizierungsanforderungsmeldung 95, welche beispielsweise die MSISDN-Nummer der SIM-Karte 62 des Mobilfunkgerätes 60, die Sitzungsidentifizierung des IPTV-Dienstes 41 und die Adresse des IPTV-Authentifizierungsdienstes 34 enthält. Diese Authentifizierungsanforderungs-Meldung 95 überträgt die IPTV-Authentifizierungs-Applikation 61 über das Mobilfunknetz des Mobilfunknetzbetreibers 20 zur Schnittstelle 32 des Authentifizierungssystems 30.

Unter Ansprechen auf die empfangene Authentifizierungsanforderungsmeldung 95 überträgt der IPTV-Authentifizierungsdienst 34 eine Anforderungsmeldung 100 über die Schnittstelle 31 des Authentifizierungsrechners 30 zur Authentifizierungseinrichtung 21 des Mobilfunknetzbetreibers 20, an welchem das Mobilfunkgerät 60 angemeldet ist. Bei dem beschriebenen Beispiel enthält die Anforderungsmeldung 100 eine GPI-Anforderung an die Bootstrapping Server Function der Authentifizierungseinrichtung 21, eine GPI-Information zum IPTV-Authentifizierungsdienst 34 zu übertragen. Bei der GPI-Information handelt es sich um eine GBA Push-Information (GPI) entsprechend der technischen Spezifizierung 3GPP TS 33.223. Die GPI-Information enthält, vereinfacht gesagt, nutzerbezogene Schlüssel, die Challenge und die zugehörige Response für das Challenge-Response-Verfahren, welches zwischen dem IPTV-Authentifizierungsdienst 34 und der IPTV-Authentifizierungs-Applikation 61 des Mobilfunkgerätes 60 durchgeführt werden soll. Die Authentifizierungseinrichtung 21 kann diese Informationen über das Home Subscriber System 22 des Mobilfunknetzbetreibers 20 anfordern. Anschließend überträgt die Authentifizierungseinrichtung 21 bzw. deren Bootstrapping Server Function die GPI-Information über die Kommunikationsschnittstelle 31 zum IPTV-Authentifizierungsdienst 34. Der Authentifizierungsdienst 34 überträgt dann die in der GPI-Information enthaltene Challenge in einer Meldung 110 über die Kommunikationsschnittstelle 32 und das Mobilfunknetz des Mobilfunknetzbetreibers 20 zur IPTV-Authentifizierungs-Applikation 61 des Mobilfunkgerätes 60. Ist die IPTV-Authentifizierungs-Applikation 61 im Mobilfunkgerät 60 und nicht in der SIM-Karte 62 installiert, übergibt die IPTV-Authentifizierungs-Applikation 61 die Challenge der SIM-Karte 62. Die SIM-Karte 62 überprüft in an sich bekannter Weise (z.B. über die USIM Application), ob es sich bei der empfangenen Challenge um eine korrekte Anfrage handelt. Auf diese Weise kann die SIM-Karte 62 die Identität des Mobilfunknetzbetreibers 20 überprüfen. Die SIM-Karte 62 generiert bei erfolgreicher Prüfung mit seinem Schlüssel die zur Challenge gehörende Response und überträgt diese beispielsweise in einer verschlüsselten Meldung 115 mittels des mobilen Endgeräts 60 zurück zum IPTV-Authentifizierungsdienst 34. In dem IPTV-Authentifizierungssystem 30 ist die GPI Antwort des MNO 20 gespeichert, mit welcher der IPTV-Authentifizierungsdienst 34 die empfangene Response vergleicht. Kann der IPTV-Authentifizierungsdienst 34 die Response erfolgreich vergleichen, so wird die Authentifizierung des Nutzers als erfolgreich bewertet.

Der IPTV-Authentifizierungsdienst 34 ermittelt zu der MSISDN-Nummer der SIM-Karte 62 eine zugeordnete IPTV-Nutzeridentifikation, im Folgenden kurz IPTV-ID, mittels einer hinterlegten Zuordnungstabelle. Dieses Mapping zwischen Mobilfunk- und IPTV-ID ist in Fig. 2 mit dem Bezugszeichen 117 gekennzeichnet. Unter Ansprechen auf die erfolgreiche Authentifizierung überträgt der IPTV-Authentifizierungsdienst 34 ein Kennwort, welches ein sicherer One-Time-Token sein kann, in einer Nachricht 125 über die Kommunikationsschnittstelle 33 zum IPTV-Client 51 des IPTV-Endgeräts 50. Der IPTV-Client 51 überträgt dann das vom IPTV-Authentifizierungsdienst 34 empfangene Kennwort in einer Nachricht 130 zum IPTV-Dienst 41. Der IPTV-Dienst 41 validiert das Kennwort in einer Meldung 120 beim IPTV-Authentifizierungsdienst 34 als zulässige Anmeldung oder Authentifizierung des Nutzers gegenüber dem IPTV-Dienst 41.

Alternativ kann der IPTV-Authentifizierungsdienst 34 den zum IPTV-Client 51 übertragenen One-Time-Token in einer Nachricht 120 über die Kommunikationsschnittstelle 33 oder die weitere Schnittstelle 35 auch zum IPTV-Dienst 41 übertragen. Der IPTV-Dienst 41 vergleicht dann den vom IPTV-Authentifizierungsdienst 34 empfangenen One-Time-Token mit dem vom IPTV-Client 51 empfangenen One-Time-Token auf Übereinstimmung hin. Stimmen die beiden Token überein, gilt der Kunde als authentifiziert.

Daraufhin überträgt der IPTV-Authentifizierungsdienst 34 in einer Nachricht 132 die IPTV-ID, sowie gegebenenfalls beim IPTV-Authentifizierungsdienst 34 hinterlegte, mit der IPTV-ID verknüpfte nutzerindividuelle Parameter und/oder Einstellungen, wie beispielsweise das Alter des Nutzers, zum IPTV-Dienst 41, welcher daraufhin das personalisierte IPTV-Produkt bereitstellt. Alternativ können die in der Nachricht 132 enthaltenen Informationen auch bereits zusammen mit dem Kennwort übertragen werden.

Auf diese Weise kann sich der Kunde des Mobilfunknetzbetreibers 20 sicher und mit Schutz der Privatsphäre bei dem IPTV-Dienst 41 anmelden und das personalisierte IPTV erhalten.

Dieses Ziel wird insbesondere dadurch erreicht, dass das Mobilfunkgerät 60 einen IPTV-Authentifizierungsclient 61 besitzt, der eine Authentifizierungsanforderungsmeldung 95 zum IPTV-Authentifizierungsdienst 34 übertragen kann. Der IPTV-Authentifizierungsdienst 34 enthält eine entsprechend ausgebildete Authentifizierungsfunktion, die die Authentifizierungsanforderungsmeldung von dem IPTV-Authentifizierungsclient 61 des Mobilfunkgeräts empfangen kann. Darüber hinaus holt sich der IPTV-Authentifizierungsdienst 34 unter Ansprechen auf die Authentifizierungsanforderungsnachricht automatisch die entsprechenden Challenge-Response-Informationen vom Mobilfunknetzbetreiber 20, zu dem der Nutzer des Mobilfunkgerätes 60 gehört, und führt anschließend eine Authentifizierung mit dem Mobilfunkgerät durch, ohne das sich der Nutzer am IPTV-Dienst persönlich identifizieren muss.

Auf diese Weise ist eine einfache, sichere Authentifizierung für den Nutzer und der Schutz der Privatsphäre garantiert, da vom Nutzer keine manuelle Eingabe von Identifikationsinformationen verlangt wird und die Authentifizierung gegenüber dem IPTV-Dienst z.B. anonym abläuft.

Durch die Erfindung wird eine Authentisierung von IPTV-Kunden an eigenen und fremden IPTV-Endgeräten ermöglicht und dadurch die Bereitstellung eines mobilen personalisierten IPTV-Dienstes realisiert. Insbesondere wird auch ein mobiler personalisierter IPTV-Dienst an IPTV-Endgeräten ermöglicht, bei denen bisher keine Möglichkeit zur Authentisierung fremder Nutzer zur Verfügung stand. Besonders vorteilhaft wird zudem eine integrierte Altersverifikation ermöglicht, sowie eine vereinfachte digitale Rechteverwaltung (DRM, Digital Rights Management).

## Patentansprüche

1. Verfahren zum Schutz der Privatsphäre bei der Anmeldung eines Nutzers an einem gesicherten personalisierten IPTV-Dienst (41) mittels eines bei einem Mobilfunknetzbetreibers (20) angemeldeten Mobilfunkgeräts (60), in welchem eine Authentifizierungsapplikation (61) installiert ist, mit folgenden Schritten:
- Anfordern eines gesicherten personalisierten IPTV-Dienstes (41) in einem IPTV-Endgerät (50);
- Herstellen einer Kommunikationsverbindung zwischen dem IPTV-Endgerät (50) und einem Authentifizierungsdienst (34);
- Übertragen der Adresse des Authentifizierungsdienstes (34) und der Sitzungsidentifikation des gesicherten personalisierten IPTV-Dienstes (41) vom Authentifizierungsdienst (34) zum IPTV-Endgerät (50);
- Übertragen der Adresse der Authentifizierungseinrichtung (34) und der Sitzungsidentifikation des gesicherten personalisierten IPTV-Dienstes (41) an das Mobilfunkgerät (60);
- unter Ansprechen auf die Adresse des Authentifizierungsdienstes (34) Übertragen einer Authentifizierungsmeldung, welche eine Authentifizierungsanforderung und eine Identifikationsnummer des Mobilfunkgeräts (60) enthält, von der Authentifizierungsapplikation (61) des Mobilfunkgeräts (60) zum Authentifizierungsdienst (34);
- Durchführen einer sicheren Authentifizierung zwischen dem Authentifizierungsdienst (34) und dem Mobilfunkgerät (60);
- Erzeugen eines Kennworts und Ermitteln einer der Identifikationsnummer des Mobilfunkgeräts (60) zugeordneten IPTV-Nutzerkennung durch den Authentifizierungsdienst (34), wenn die Authentifizierung erfolgreich war;
- Übertragen des Kennwortes zum IPTV-Endgerät (50);
- Übertragen der IPTV-Nutzerkennung zum gesicherten personalisierten IPTV-Dienst (41);
- Anmelden des Nutzers am gesicherten personalisierten IPTV-Dienst (41), indem das Kennwort vom IPTV-Endgerät (50) zum gesicherten personalisierten IPTV-Dienst (41) übertragen wird.

2. Verfahren nach Anspruch 1,
**dadurch gekennzeichnet, dass**
als sichere Authentifizierung ein Challenge-Response-Verfahren durchgeführt wird.

3. Verfahren nach Anspruch 2,
**dadurch gekennzeichnet, dass**
der Authentifizierungsdienst (34) die zur Durchführung des Challenge-Response-Verfahrens erforderlichen Authentifizierungsinformationen vom Mobilnetzbetreiber (20), an welchem das Mobilfunkgerät (60) angemeldet ist, anfordert.

4. Verfahren nach einem der vorstehenden Ansprüche,
**dadurch gekennzeichnet, dass**
das Kennwort vom Authentifizierungsdienst (34) auch an den sicheren personalisierten IPTV-Dienst (41) übertragen wird, und dass der IPTV-Dienst (41) das vom Authentifizierungsdienst und das vom IPTV-Endgerät (50) empfangene Kennwort auf Übereinstimmung hin prüft.

5. Verfahren nach einem der Ansprüche 1 bis 4,
**dadurch gekennzeichnet, dass**
der IPTV-Dienst (41) das Kennwort vom IPTV-Endgerät (50) empfängt und beim Authentifizierungsdienst (34) validiert.

6. Verfahren nach einem der vorstehenden Ansprüche,
**dadurch gekennzeichnet, dass**
die Adresse des Authentifizierungsdienstes (34) und der Sitzungsidentifikation des gesicherten personalisierten IPTV-Dienstes (41) in Form einer codierten Information, insbesondere eines Barcodes, zum IPTV-Endgerät (50) übertragen und mittels eines Codelesers (63) oder einer Kamera (63) des Mobilfunkgeräts (60) in das Mobilfunkgerät übertragen werden.

7. Verfahren nach einem der vorstehenden Ansprüche,
**dadurch gekennzeichnet, dass**
die von der Authentifizierungs-Applikation (61) erzeugte Authentifizierungsmeldung ferner die Adresse des Authentifizierungsdienstes und die Sitzungsidentifikation des ausgewählten IPTV-Dienstes (41) enthält.

8. Telekommunikationssystem (10) zum Schutz der Privatsphäre bei der Anmeldung eines Nutzers an einem gesicherten personalisierten IPTV-Dienst (41) mittels eines Mobilfunkgeräts (60), mit
einer wenigstens einen sicheren personalisierten IPTV-Dienst (41) zur Verfügung stellenden Plattform (40), einem IPTV-Endgerät (50),
einem bei einem Mobilfunknetzbetreiber (20) angemeldeten und dem Nutzer zugeordnetes Mobilfunkgerät (60), auf welchem eine Authentifizierungs-Applikation (61) installiert ist,
einem Authentifizierungsdienst (34), der über eine erste Kommunikationsschnittstelle (33) mit dem IPTV-Endgerät (50) und über eine zweite Kommunikationsschnittstelle (33) mit der Authentifizierungs-Applikation des Mobilfunkgeräts (60) kommuniziert,
wobei der Authentifizierungsdienst (34) zum Übertragen der Adresse des Authentifizierungsdienstes (34) und der Sitzungsidentifikation eines am IPTV-Endgerät (50) ausgewählten sicheren personalisierten IPTV-Dienstes (41) zum IPTV-Endgerät (50) ausgebildet ist, wobei eine Einrichtung (63) zum Übertragen der Adresse des Authentifizierungsdienstes (34) und der Sitzungsidentifikation des am IPTV-Endgerät ausgewählten sicheren personalisierten IPTV-Dienstes (41) zur Authentifizierungs-Applikation (61) des Mobilfunkgerätes (60) vorgesehen ist,
wobei die Authentifizierungs-Applikation (61) des Mobilfunkgeräts (60) unter Ansprechen auf die empfangene Adresse des Authentifizierungsdienstes (34) eine Authentifizierungsmeldung, welche eine Authentifizierungsaufforderung und eine Identifikationsnummer des Mobilfunkgeräts (60) enthält, erzeugt und über ein Mobilfunknetz zum Authentifizierungsdienst (34) überträgt,
wobei der Authentifizierungsdienst (34) und die Authentifizierungs-Applikation (61) des Mobilfunkgeräts (60) zur Durchführung einer sicheren Authentifizierung ausgebildet sind, wobei der Authentifizierungsdienst (34) nach einer erfolgreichen Authentifizierung ein Kennwort erzeugt und dieses über die erste Kommunikationsschnittstelle (33) zum IPTV-Endgerät (50) überträgt, und eine der Identifikationsnummer des Mobilfunkgeräts (60) zugeordnete IPTV-Nutzerkennung ermittelt und diese zum IPTV-Dienst (41) überträgt, wobei
das IPTV-Endgerät (50) zur Übertragung des Kennworts zum IPTV-Dienst (41) ausgebildet ist, und wobei der IPTV-Dienst (41) unter Ansprechen auf das empfangene Kennwort den Zugang für den Nutzer auf den personalisierten IPTV-Dienst freigibt.

9. Telekommunikationssystem nach Anspruch 8,
**dadurch gekennzeichnet, dass**
der Authentifizierungsdienst (34) und die Authentifizierungs-Applikation (61) des Mobilfunkgeräts (60) zur Durchführung eines Challenge-Response-Verfahrens ausgebildet sind.

10. Telekommunikationssystem nach Anspruch 9,
**dadurch gekennzeichnet, dass**
der Authentifizierungsdienst (34) über eine dritte Kommunikationsschnittstelle (31) mit einer Authentifizierungseinrichtung (21) des Mobilfunkbetreibers (20), bei welchem das Mobilfunkgerät (60) angemeldet ist, kommuniziert, um die für das Challenge-Response-Verfahren erforderliche Information zu erhalten.

11. Telekommunikationssystem nach einem der Ansprüche 8 bis 10,
**dadurch gekennzeichnet, dass**
der Authentifizierungsdienst (34) das Kennwort über die zweite Kommunikationsschnittstelle (33) auch zum IPTV-Dienst (41) überträgt.

12. Telekommunikationssystem nach einem der Ansprüche 8 bis 11,
**dadurch gekennzeichnet, dass**
das Kennwort ein Einmalkennwort ist.

13. Telekommunikationssystem nach einem der Ansprüche 8 bis 12,
**dadurch gekennzeichnet, dass**
die Identifikationsnummer des Mobilfunkgeräts (60) eine IMSI- oder MSISDN-Nummer ist.

14. Telekommunikationssystem nach einem der Ansprüche 8 bis 13,
**dadurch gekennzeichnet, dass**
der Authentifizierungsdienst (34) und die Plattform (40) zu dem Mobilfunkbetreiber (20), an dem das Mobilfunkgerät (60) angemeldet ist, oder zu einem anderen Mobilfunkbetreiber (150) gehören.

## Claims

1. A method for protecting privacy when a user logs into a secured personalized IPTV service (41) using a mobile communications device (60) that is subscribed to a mobile network operator (20) and in which an authentication application (61) is installed, comprising the steps of:
- requesting a secured personalized IPTV service (41) at an IPTV terminal (50);
- establishing a communication connection between the IPTV terminal (50) and an authentication service (34);
- transmitting address of the authentication service (34) and session identifier of the secured personalized IPTV service (41) from the authentication service (34) to the IPTV terminal (50);
- transferring the address of the authentication service (34) and the session identifier of the secured personalized IPTV service (41) to the mobile communications device (60);
- in response to the address of the authentication service (34), transmitting an authentication message that includes an authentication request and an identification number of the mobile communications device (60), from the authentication application (61) of the mobile communications device (60) to the authentication service (34);
- performing secure authentication between the authentication service (34) and the mobile communications device (60);
- when the authentication was successful, generating a password, and determining an IPTV user identifier associated with the identification number of the mobile communications device (60), by the authentication service (34);
- transmitting the password to the IPTV terminal (50);
- transmitting the IPTV user identifier to the secured personalized IPTV service (41);
- logging the user into the secured personalized IPTV service (41) by transmitting the password from the IPTV terminal (50) to the secured personalized IPTV service (41).

2. The method as claimed in claim 1, wherein
a challenge-response procedure is performed as said secure authentication.

3. The method as claimed in claim 2, wherein
the authentication service (34) requests authentication information required for performing the challenge-response procedure from the mobile network operator (20) to which the mobile communications device (60) is subscribed.

4. The method as claimed in any of the preceding claims,
wherein the authentication service (34) also transmits the password to the secured personalized IPTV service (41), and wherein the IPTV service (41) checks if the passwords received from the authentication service and from the IPTV terminal (50) are the same.

5. The method as claimed in any of claims 1 to 4,
wherein the IPTV service (41) receives the password from the IPTV terminal (50) and validates it with the authentication service (34).

6. The method as claimed in any of the preceding claims,
wherein the address of the authentication service (34) and the session identifier of the secured personalized IPTV service (41) are transmitted to the IPTV terminal (50) in form of encoded information, in particular as a bar code, and are transferred to the mobile communications device (60) using a code reader (63) or a camera (63) of the mobile communications device.

7. The method according to any of the preceding claims,
wherein the authentication message generated by the authentication application (61) further includes the address of the authentication service and the session identifier of the selected IPTV service (41).

8. A telecommunications system (10) for privacy protection when a user logs into a secured personalized IPTV service (41) using a mobile communications device (60), comprising:
a platform (40) providing at least one secured personalized IPTV service (41);
an IPTV terminal (50);
a mobile communications device (60) subscribed to a mobile network operator (20) and associated with the user, in which an authentication application (61) is installed;
an authentication service (34) communicating with the IPTV terminal (50) via a first communication interface (33) and with the authentication application of the mobile communications device (60) via a second communication interface (32);
wherein the authentication service (34) is adapted to transmit the address of the authentication service (34) and the session identifier of a secured personalized IPTV service (41) selected at the IPTV terminal (50) to the IPTV terminal (50);
wherein a means (63) is provided for transferring the address of the authentication service (34) and the session identifier of the secured personalized IPTV service (41) selected at the IPTV terminal (50) to the authentication application (61) of the mobile communications device (60);
wherein, in response to the received address of the authentication service (34), the authentication application (61) of the mobile communications device (60) generates an authentication message including an authentication request and an identification number of the mobile communications device (60) and transmits it to the authentication service (34) via a mobile communications network;
wherein the authentication service (34) and the authentication application (61) of the mobile communications device (60) are adapted to perform a secure authentication;
wherein, following successful authentication, the authentication service (34) generates a password and transmits it to the IPTV terminal (50) via the first communication interface (33), and determines an IPTV user identifier associated with the identification number of the mobile communications device (60) to transmit it to the IPTV service (41);
wherein the IPTV terminal (50) is adapted to transmit the password to the IPTV service (41); and
wherein the IPTV service (41), in response to the password received, grants access for the user to the personalized IPTV service.

9. The telecommunications system as claimed in claim 8, wherein the authentication service (34) and the authentication application (61) of the mobile communications device (60) are adapted to perform a challenge-response procedure.

10. The telecommunications system as claimed in claim 9, wherein the authentication service (34) communicates with an authentication device (21) of the mobile network operator (20) to which the mobile communications device (60) is subscribed via a third communication interface (31) to obtain the information required for the challenge-response procedure.

11. The telecommunications system as claimed in any of claims 8 to 10, wherein the authentication service (34) also transmits the password to the IPTV service (41), via the first (33) or a further communication interface (35).

12. The telecommunications system as claimed in any of claims 8 to 11, wherein the password is a single-use password (one-time token).

13. The telecommunications system as claimed in any of claims 8 to 12, wherein the identification number of the mobile communications device (60) is an IMSI (International Mobile Subscriber Identity) number, or a MSISDN (Mobile Subscriber ISDN) number.

14. The telecommunications system as claimed in any of claims 8 to 13, wherein the authentication service (34) and the platform (40) belong to the mobile network operator (20) to which the mobile communications device (60) is subscribed, or to another mobile network operator (150).

## Revendications

1. Procédé de protection de la sphère privée lors de l'inscription d'un utilisateur à un service IPTV personnalisé sécurisé (41) au moyen d'un appareil (60) de téléphonie mobile déclaré chez un opérateur (20) de réseau de téléphonie mobile, où est installée une application d'authentification (61), comprenant les étapes suivantes :
- demande d'un service IPTV personnalisé sécurisé (41) dans un terminal IPTV (50) ;
- établissement d'une liaison de communication entre le terminal IPTV (50) et un service d'authentification (34) ;
- transmission de l'adresse du service d'authentification (34) et de l'identification de session du service IPTV personnalisé sécurisé (41) du service d'authentification (34) au terminal IPTV (50) ;
- transmission de l'adresse du service d'authentification (34) et de l'identification de session du service IPTV personnalisé sécurisé (41) à l'appareil (60) de téléphonie mobile ;
- en réaction à l'adresse d'authentification (34), transmission d'un message d'authentification comprenant une demande d'authentification et un numéro d'identification de l'appareil (60) de téléphonie mobile, de l'application d'authentification (61) de l'appareil (60) de téléphonie mobile au service d'authentification (34) ;
- exécution d'une authentification sécurisée entre le service d'authentification (34) et l'appareil (60) de téléphonie mobile ;
- génération d'un mot de passe et détermination d'un identifiant d'utilisateur IPTV associé au numéro d'identification de l'appareil (60) de téléphonie mobile par le service d'authentification (34), si l'authentification est réussie ;
- transmission du mot de passe au terminal IPTV (50) ;
- transmission de l'identifiant d'utilisateur IPTV au service IPTV personnalisé sécurisé (41) ;
- inscription de l'utilisateur au service IPTV personnalisé sécurisé (41) par transmission du mot de passe du terminal IPTV (50) au service IPTV personnalisé sécurisé (41).

2. Procédé selon la revendication 1, **caractérisé en ce que** :
un procédé demande-réponse est exécuté en tant qu'authentification sécurisée.

3. Procédé selon la revendication 2, **caractérisé en ce que** :
le service d'authentification (34) demande à l'opérateur (20) de réseau de téléphonie mobile auquel l'appareil (60) de téléphonie mobile est déclaré, les informations d'authentification exigées pour l'exécution du procédé demande-réponse.

4. Procédé selon l'une des revendications précédentes, **caractérisé en ce que** :
le mot de passe est également transmis du service d'authentification (34) au service IPTV personnalisé sécurisé (41), et **en ce que** le service IPTV personnalisé sécurisé (41) contrôle la concordance entre le mot de passe reçu du service d'authentification et celui reçu du terminal IPTV (50).

5. Procédé selon l'une des revendications 1 à 4, **caractérisé en ce que** :
le service IPTV (41) reçoit le mot de passe du terminal IPTV (50) et le valide auprès du service d'authentification (34).

6. Procédé selon l'une des revendications précédentes, **caractérisé en ce que** :
l'adresse du service d'authentification (34) et celle de l'identification de session du service IPTV personnalisé sécurisé (41) sont transmises au terminal IPTV (50) sous forme d'information codée, en particulier de code-barres, et sont transmises dans l'appareil de téléphonie mobile au moyen d'un lecteur de codes (63) ou d'un dispositif de prise de vue (63) de l'appareil (60) de téléphonie mobile.

7. Procédé selon l'une des revendications précédentes, **caractérisé en ce que** :
le message d'authentification généré par l'application d'authentification (61) comprend en outre l'adresse du service d'authentification et l'identification de session du service IPTV (41) sélectionné.

8. Système de télécommunication (10) pour la protection de la sphère privée lors de l'inscription d'un utilisateur à un service IPTV personnalisé sécurisé (41) au moyen d'un appareil (60) de téléphonie mobile, comportant :
une plate-forme (40) fournissant au moins un service IPTV personnalisé sécurisé (41),
un terminal IPTV (50),
un appareil (60) de téléphonie mobile déclaré chez un opérateur (20) de réseau de téléphonie mobile et associé à l'utilisateur, sur lequel est installée une application d'authentification (61),
un service d'authentification (34), communiquant par une première interface de communication (33) avec le terminal IPTV (50), et par une deuxième interface de communication (33) avec l'application d'authentification de l'appareil (60) de téléphonie mobile,
le service d'authentification (34) étant prévu pour la transmission au terminal IPTV (50) de l'adresse du service d'authentification (34) et de l'identification de session d'un service IPTV personnalisé sécurisé (41) sélectionné sur le terminal IPTV (50), un dispositif (63) étant prévu pour la transmission de l'adresse du service d'authentification (34) et de l'identification de session du service IPTV personnalisé sécurisé (41) sélectionné sur le terminal IPTV (50) à l'application d'authentification (61) de l'appareil de téléphonie mobile (60),
l'application d'authentification (61) de l'appareil (60) de téléphonie mobile générant, en réaction à l'adresse du service d'authentification (34) reçue, un message d'authentification comprenant une demande d'authentification et un numéro d'identification de l'appareil (60) de téléphonie mobile, et transmettant celui-ci au service d'authentification (34) par l'intermédiaire d'un réseau de téléphonie mobile,
le service d'authentification (34) et l'application d'authentification (61) de l'appareil (60) de téléphonie mobile étant prévus pour l'exécution d'une authentification sécurisée, le service d'authentification (34) générant un mot de passe après une authentification réussie et transmettant celui-ci au terminal IPTV (50) par l'intermédiaire de la première interface de communication (33), et déterminant un identifiant d'utilisateur IPTV associé au numéro d'identification de l'appareil (60) de téléphonie mobile et transmettant celui-ci au service IPTV (41), le terminal IPTV (50) étant prévu pour la transmission du mot de passe au service IPTV (41), et le service IPTV (41) autorisant l'accès de l'utilisateur au service IPTV personnalisé en réaction au mot de passe reçu.

9. Système de télécommunication selon la revendication 8, **caractérisé en ce que** :
le service d'authentification (34) et l'application d'authentification (61) de l'appareil (60) de téléphonie mobile sont prévus pour l'exécution d'un procédé demande-réponse.

10. Système de télécommunication selon la revendication 9, **caractérisé en ce que** :
le service d'authentification (34) communique par l'intermédiaire d'une troisième interface de communication (31) avec un dispositif d'authentification (21) de l'opérateur (20) du réseau de téléphonie mobile chez qui l'appareil (60) de téléphonie mobile est déclaré, afin d'obtenir l'information exigée pour le procédé demande-réponse.

11. Système de télécommunication selon l'une des revendications 8 à 10, **caractérisé en ce que** :
le service d'authentification (34) transmet également le mot de passe au service IPTV (41) par l'intermédiaire de la deuxième interface de communication (33).

12. Système de télécommunication selon l'une des revendications 8 à 11, **caractérisé en ce que** :
le mot de passe est un mot de passe à usage unique.

13. Système de télécommunication selon l'une des revendications 8 à 12, **caractérisé en ce que** :
le numéro d'identification de l'appareil (60) de téléphonie mobile est un numéro IMSI ou MSISDN.

14. Système de télécommunication selon l'une des revendications 8 à 13, **caractérisé en ce que** :
le service d'authentification (34) et la plate-forme (40) appartiennent à l'opérateur (20) de réseau de téléphonie mobile chez qui l'appareil (60) de téléphonie mobile est déclaré, ou à un autre opérateur (150) de réseau de téléphonie mobile.
